# EUROPEAN PATENT APPLICATION

(11) **EP 4 442 765 A1**
(43) Date of publication of application: **09.10.2024**
(21) Application number: 23166256.0
(22) Date of filing: 02.04.2023
(51) Int. Cl.: C08L 67/04, C08L 99/00

(54) **BIODEGRADABLE PLASTIC COMPOSITE MATERIAL MODIFIED WITH COFFEE GROUNDS**

(71) Applicant: BPR Lab Bio Plastik A.S., 34381Sisli, Istanbul (TR)
(72) Inventor: UGUR, Enes, 34087 Fatih/Istanbul (TR); DURAN, Ali, 34087 Fatih/Istanbul (TR)
(74) Representative: Bakirci, Utkan Bahri

(57) **Abstract**

The present invention relates to a fire resistant biodegradable plastic composite material and addresses the critical issue of plastic pollution and the growing need for environmentally conscious solutions. The present invention also relates to the process for producing a fire-resistant biodegradable plastic composite material as well as its use for producing a fire-resistant plastic product. In particular, the present invention provides an optimal blend of waste coffee grounds and polylactic acid in order to produce a sustainable plastic material having improved properties.

## Description

The present invention relates to a fire-resistant biodegradable plastic composite material and addresses the critical issue of plastic pollution and the growing need for environmentally conscious solutions. The present invention also relates to the process for producing a fire-resistant biodegradable plastic composite material as well as its use for producing a fire-resistant plastic product.

According to recent statistics, it is estimated that over 8 million tons of plastic waste end up in our oceans every year, causing harm to marine life and ecosystems. Therefore, it is clear that synthetic materials, including non-biodegradable polymers such as polyethylene, polypropylene, polyvinyl chloride, polyamide, polycarbonate, cause serious environmental problems. Their degradation only occurs after several decades, nevertheless the products manufactured from these materials are abandoned in the middle of nature.

As society becomes increasingly aware of the detrimental effects of traditional methods on the environment, the demand for more sustainable alternatives grows. Especially since a few years, society is calling for more sustainable alternatives in response to this pressing problem. With the world facing increasing environmental challenges, the need for sustainable technologies has never been greater. Thus, the increasing demand for sustainable technologies is a response to the growing environmental crisis caused by traditional methods. The use of non-renewable resources and the generation of waste, particularly plastic waste, have led to significant harm to our planet. The plastic pollution crisis is further compounded by the fact that plastic takes hundreds of years to degrade, leading to a growing need for sustainable alternatives.

However, in spite of all these facts plastics are widely used in various fields due to their complicated structure, convenience and optimized performance for differing applications. Therefore, it is very difficult to completely stop the use of plastic materials as well as replacing them completely with similarly performing alternatives. Since they are widely used as close and essential elements in the daily life of modern people and in the industry, the studies for a solution has to take into account the ever increasing amount of plastic waste.

The present invention is a response to the growing need for sustainable technologies and provides a unique solution that addresses this need by harnessing renewable resources and reducing the reliance on non-renewable resources, contributing to a more sustainable future for all. The novel solution of utilizing the waste materials of the present invention, is not only eco-friendly but also cost-effective and efficient.

The state of the art solutions in the field of sustainable technologies has focused on reducing the reliance on single-use plastics and finding alternatives to traditional methods that have a negative impact on the environment. Efforts have been made to develop biodegradable plastics, reusable packaging, and other solutions that reduce waste. Some of those prior art documents even disclose the use of waste in relation to coffee grounds for producing more sustainable products, as summarized herein below:

US2022227980 discloses a polyolefin-based resin composition for a vehicle interior material including heat-treated waste coffee grounds.

US2020305540 discloses a process for the manufacture of ecological footwear, using recycled organic materials or post-consumer and/or industrial waste. For the production of the footwear materials such as sargassum (sargassum), coffee waste agave bagasse and solvent-free water-based adhesives are used.

KR20200123305 discloses a method for manufacturing a biodegradable plastic using coffee shells. The biodegradable plastic is used for producing a bio-plastic straw for coffee or beverages. The method includes a step of a coffee shell fermentation whereby coffee shells are mixed with an effective microorganism solution to extract the fatty acids from the coffee shells so that fatty acids contained in the coffee shells can be removed efficiently. It is disclosed that, a formulation suitable for mixing with a plastic resin can be obtained thereby.

CN111825887 discloses a composite material containing coffee grounds and a preparation method thereof. The technical scheme of the invention is as follows: the composite material containing coffee grounds comprises the following components by mass percentage: 10-85% of coffee grounds, 10-90% of an inorganic adhesive, 1-40% of a curing agent and 0-10% of a natural polymer additive.

CN113174069 discloses a biomass functional masterbatch wherein the functional component includes at least one biomass powder. It is also disclosed that the biomass powder comprises coffee grounds.

KR20130083742A discloses a bioplastic containing coffee waste and a method for manufacturing the same, and the bioplastic using the coffee byproduct of the present invention has a tensile strength equal to that of plastics made of 100% chemical synthetic resin and is disposable.

Various other technologies for the production of biodegradable plastics without using raw materials based on fossil fuels, have been proposed. These include methods for the production of biodegradable plastics using food resources such as tapioca, corn, rice, sugar cane as the raw materials.

However, these prior art solutions have limitations, including a lack of scalability, high costs, and limited availability. In some of the prior art, even the use of coffee waste with polylactic acid (PLA) is disclosed, however, when looking into said prior art documents, the use of coffee grounds in PLA composites is still in the early stages of research and development, and more work is needed to determine the optimal blend and processing conditions for these materials. Actually degradable plastics such as polylactic acid (PLA), polybutylene adipate terephthalate (PBAT), polyhydroxyalkanoate (PHA), poly-β-hydroxybutyric acid (PHB), polymethylethylene carbonate ester (PPC) and the like are starting to be tried out and used in only a limited number of applications, but in addition to being in the early stages of development they still lack competitiveness especially in specific applications, due to the high costs of these materials.

Additionally, some biodegradable plastics have been found to have a similar negative impact on the environment as traditional plastics, therefore there is a need in the prior art for producing a sustainable biodegradable plastic material which doesn't have a negative effect to the environment, when its overall impact is considered starting from its production to its consumption. There is in addition a need in the prior art to find specific applications where sustainable biodegradable plastic materials can be used, such that their best properties are utilized.

Thus, it is an object of the present invention to provide an optimal blend of waste coffee grounds and polylactic acid in order to produce a sustainable plastic material having improved properties.

It is also another object of the present invention to find specific applications for biodegradable plastic materials produced by using waste coffee grounds.

This object and others are achieved by the present invention which relates to a biodegradable plastic material having fire retardant properties, produced by using waste coffee grounds.

Therefore, unlike the above-mentioned prior art documents the present invention presents novel ways of using the waste coffee grounds, which is a very common and widely spread type of waste that has to be recycled for the reasons mentioned herein.

The terms "waste coffee grounds" refer to ground coffee beans once they have been used to make coffee. Thus, waste coffee grounds may alternatively be termed "recycled coffee grounds" or "used coffee grounds".

Even though not produced everywhere in the world, people of all ages and genders consume coffee all around the globe and the market for products related to coffee has been rising explosively year over year as a result of the introduction of new coffee machines, easier ways of preparation and the rapid expansion of coffee shops. Thus, it is needless to say that coffee is the favorite product of many people and its consumption is very high.

Accordingly, tons of waste coffee grounds and related products are discarded each year and the recycled amount is negligible. Even worse the recycled amount is not increasing as fast as the consumption increase. Thus, it can be concluded that in the past most of the waste coffee grounds have been either dumped to the landfill or incinerated. Both of these methods are not preferred in an environmental point of view since waste coffee grounds discarded on landfills will have diverse effects on the soil and incineration will cause carbon emission as well as causing air pollution. However, operations for the incineration of these manufactured objects are more and more often implemented in an attempt to limit these harmful effects. People are particularly aware with the additional problems caused by incineration. So, recycling appears as a better solution but the fact remains that the development and optimization of these operations leading to successful recycling processes are significantly difficult and expensive in order to achieve an overall reduction in pollution.

There have been various plans and studies on how to handle and properly reuse coffee grounds, including:
1. Using coffee grounds to boost the biological nutritional effect of the soil or any other material used as a growing medium for plants, or edible fungus. However, the value of this method for coffee grounds is relatively low, and it is more expensive and inconvenient than to use conventional wood chips and other materials for the same purpose.
2. To create biodiesel, extracting the fatty components from the coffee grounds. However, the amount of fat in the coffee grounds is not significant, and the supplied data makes it difficult to determine the economic benefit.
3. The most appropriate way for reusing coffee grounds is to combine polymer materials and coffee grounds to create composite materials. Thus, research leading to the present invention has focused on this as the most efficient way of reusing coffee waste.

It is difficult to estimate the exact amount of coffee waste produced worldwide annually, but it is estimated to be in millions of tons. A significant portion of this waste is generated during the production and processing of coffee, while some is also generated during its consumption. The waste includes coffee grounds, unused coffee beans, and other coffee-related waste such as paper cups and plastic packaging. Although there have been several attempts to use coffee waste in order to produce plastic materials, problems caused by the high-water content of coffee waste and the problem of adaptation of mechanical properties has to be overcome.

The present invention provides a novel composition which makes it possible to obtain a biodegradable composite material fulfilling the above-mentioned requirements. Accordingly, the present invention also provides a method for successfully using waste coffee grounds in order to produce a biodegradable plastic material. In an aspect of the present invention, fire resistant property is imparted to the biodegradable plastic material produced from the waste coffee grounds. The details regarding the components of this composition, the synergy obtained from the specific combination of said components and the method of production leading to the plastic materials with improved properties for the intended applications, such as fire resistance, is explained in detail herein below.

In all the embodiments of the present invention, including the production of fire-resistant biodegradable plastic composite material, waste coffee grounds are used as a raw material. Said coffee grounds are waste material of coffee after being served, tasted, drank or consumed in any other way. The waste coffee grounds to be used as the raw material are collected from places where high amounts of coffee is consumed. This may include several different ways, such as;
- Setting up a collection system at coffee shops and cafes: They can place containers for collecting used coffee grounds, which can then be collected by waste management companies or other organizations.
- Partnering with local businesses: Companies that use large amounts of coffee, such as hotels and restaurants, can also be approached to collect their waste coffee grounds.
- Community collection events: Regular events can be organized in public spaces where people can bring their used coffee grounds to be collected.
- Home collection: Individuals can collect their own used coffee grounds and bring them to a central collection point or to local businesses for disposal.

Regardless of the method used, it's important to ensure for the biodegradable plastic material of the present invention, that the collected coffee grounds are properly stored and transported to prevent attracting pests and to minimize any potential odor.

The waste coffee grounds collected in either way, is then placed in a drying oven which is kept at 100 °C. The waste coffee grounds have to stay in the drying oven up to 48 hours in order to remove all the moisture content, thereby the waste coffee grounds are converted to waste coffee granules. The waste coffee granules obtained with the drying step or in any other way has to be kept at room temperature and in a dry environment so that they don't get moisturized. In average, coffee grounds account for up to two-thirds of the weight of coffee dry matter. The coffee granules may be grinded in a ball mill and then added to an agitated vessel.

According to the method of the present invention, then polylactic acid (PLA) is blended with the waste coffee granules to create a composite material. The coffee grounds/granules can act as a filler, improving the mechanical properties and reducing the cost of the PLA. Additionally, using coffee grounds as a filler also helps to reduce waste, as it is a byproduct of the coffee industry.

Polylactic acid (PLA) is a biodegradable and renewable thermoplastic derived from lactic acid. It is commonly used in the manufacture of products such as food containers, packaging, and biodegradable medical implants. PLA has several advantages, including being compostable, having a lower carbon footprint compared to petroleumbased plastics, and being non-toxic. However, it also has some disadvantages, such as being more brittle and having a lower melting point compared to other plastics. It has been surprisingly found out that these disadvantages are eliminated with the use of waste coffee granules together with PLA while producing a biodegradable plastic material.

In this step of the method of the present invention, the waste coffee granules are mixed with PLA in an agitated vessel in differing ratios. Every ratio leading to the biodegradable plastic material and the improved properties for the intended applications, represents a separate embodiment of the present invention. The mixing process doesn't require any additional heating thus the energy costs are minimized.

In the next step, magnesium hydroxide Mg(OH)₂ is added to the mixture. Mg(OH)₂ is the chemical formula for magnesium hydroxide, which is a white, crystalline solid that is commonly used in various industrial applications such as a filler in plastics, as a flame retardant, and as a component in the production of fertilizers and other chemicals. When used as a filler in plastics, it improves the mechanical and thermal properties of the material. It can also be used as a flame retardant by modifying the polymer structure and producing a char layer that protects the material from further combustion.

According to the present invention, it has been found out that, the flame-retardant property provided with magnesium hydroxide is even enhanced when it is used together with waste coffee granules and PLA, due to the synergistic effect in between these raw materials. In addition to this, mechanical and thermal properties of the biodegradable plastic material is improved.

In the most preferred embodiment of the present invention, nano-sized magnesium hydroxide is used. As used herein and throughout the specification, nano-sized magnesium hydroxide refers to particles of magnesium hydroxide that are on the nanometer scale. Magnesium hydroxide itself is a white solid with the chemical formula Mg(OH)₂. When the particle size of magnesium hydroxide is reduced to the nanoscale range, it exhibits different physical and chemical properties compared to bulk magnesium hydroxide.

Without being bound by theory, nano-sized magnesium hydroxide is a more effective flame retardant because it releases water when heated, which helps to cool and dilute the flames. This process is known as dehydration, which occurs when the high temperature of the fire causes the magnesium hydroxide to lose its water molecules and convert into magnesium oxide (MgO). The release of water also helps to reduce the concentration of combustible gases around the flame, which further inhibits the spread of the fire. The smaller particle size of nano-sized magnesium hydroxide allows it to be dispersed more evenly in a polymer matrix, which improves its flame retardancy performance. When added to a polymer, the nano-sized particles of magnesium hydroxide can create a network-like structure that acts as a physical barrier to prevent the spread of flames. Additionally, the high surface area of the nanoparticles provides more sites for dehydration to occur, which enhances the flame-retardant effect.

Nano-sized magnesium hydroxide has unique properties, including high surface area, high reactivity, and high surface energy making it a better choice for the application of the present invention, especially in order to improve the flame retardancy. Moreover, the use of nano-sized magnesium hydroxide can also improve the mechanical properties of the polymer, such as tensile strength and impact resistance, without compromising the flame-retardant performance. This is because the smaller particle size allows for better dispersion and compatibility with the polymer, resulting in a more homogeneous material. Thus, by using nano-sized magnesium hydroxide as the flame retardant, the mechanical properties are not compromised in favour of flame retardance. An improved flame retardance is obtained without a loss in the mechanical properties and in preferred embodiments even better mechanical properties. Without being bound by theory, this is because the smaller particle size allowing for better dispersion and compatibility with the polymer, resulting in a more homogeneous material. Overall, the unique properties of nano-sized magnesium hydroxide, such as its high surface area and ability to release water, and the synergistic effect obtained by adding it to a composition comprising PLA and coffee grounds, make it an excellent component for the intended applications of the present invention.

In different embodiments of the present invention magnesium hydroxide is also used in combination with other flame-retardant additives, such as aluminum hydroxide and/or calcium carbonate to enhance its effectiveness. However, magnesium hydroxide is the preferred embodiment for its low cost, low density, good mechanical and flame-retardant properties.

In different embodiments of the present invention, a flame retardant selected from the list including magnesium hydroxide, calcium carbonate, aluminum hydroxide, ammonium polyphosphate, antimony oxide, boron compounds, chlorinated paraffins, decabromodiphenyl oxide, melamine cyanurate, phosphorus compounds, and zinc borate can be used either alone or in combination with one or more of said flame retardants. It's important to note that the effectiveness and suitability of these alternatives may vary depending on the specific application and material.

In differing embodiments of the present invention, magnesium hydroxide is used in producing improved biodegradable and fire-resistant materials for using in applications such as electrical and electronic equipment, building and construction materials, and transportation.

Other than its synergistic effect with waste coffee granules and PLA mixture as well as its low cost, another reason of using magnesium hydroxide as the preferred flame retardant is that, as a flame retardant, magnesium hydroxide is considered a "green" alternative to traditional halogenated flame retardants due to its non-toxicity and its ability to effectively suppress the spread of flames without producing harmful byproducts. This makes it an attractive option for the method of the present invention, since the main object of the present invention is to overcome the environmental impact of traditional methods.

After sufficient mixing in the agitated vessel a homogenous mixture with at least 3 of the components; waste coffee granules, polylactic acid (PLA) and nano sized magnesium hydroxide, is obtained. This mixture is extruded in order to obtain the final biodegradable plastic product in the form of granules and/ or film structure. The content of the final product is characterized with analytical instruments such as SEM, FTIR. Additionally, the required particle size, distribution and temperature resistance may be classified based on the intended application.

The resulting biodegradable and fire resistant plastic composite material is an industrial raw material in the form of granules and/ or film. The biodegradable plastic material of the present invention can be used as a raw material for producing plastic plates, forks, knives or spoons depending on the amounts of the 3 components in the mixture. In another embodiment, the biodegradable plastic material of the present invention is used for producing computer housing or furniture parts, with a simple arrangement of the ratio of the 3 components in the mixture.

In a different and a preferred embodiment, the biodegradable plastic material of the present invention is used in construction materials especially due to its fire resistance property.

In further embodiments plasticizers are added to the mixture of 3 components inside the agitated vessel, before extrusion. Plasticizers are a type of additive that is commonly used in the manufacture of plastics and other polymeric materials. In accordance with the present invention, these compounds are added to the composition in order to increase the flexibility, workability, or other physical properties of the final biodegradable plastic product. Especially, as the amount of waste coffee granules increase, the obtained plastic product becomes more brittle. The addition of a plasticizer to the composition changes its physical properties in a number of ways. For instance they increase the flexibility of the polymer composition by reducing its glass transition temperature (Tg), which is the temperature at which the polymer transitions from a rigid, glass-like state to a more flexible, rubbery state. This makes the polymer easier to work with, mold, and shape. Thus, especially in embodiments where the final composition of the present invention will be used in injection molding processes, in order to obtain the final biodegradable plastic materials, the addition of plasticizers are preferred. Plasticizers also improve the durability and strength of the obtained polymeric materials by reducing their hardness and increasing their impact resistance. Additionally, plasticizers may also improve the clarity, transparency, and color of the plastic materials in specific embodiments.

There are many different types of plasticizers suitable for the present invention, including phthalates, adipates, citrates, and others known in the prior art. One or more of the plasticizers selected from the list comprising diisobutyl phthalate, diisodecyl phthalate, diisononyl phthalate, chlorinated paraffin and dioctyl terephthalate are the preferred plasticizers.

Although not being considered typically as a plasticizer and being a type of lubricant that is commonly used in industrial and commercial applications, silicon oil may also be used instead of the above-mentioned plasticizers or in combination with them in the composition. Silicone oil is a synthetic oil made from silicon and oxygen atoms and is often used due to its resistance to heat, moisture, and chemicals. As mentioned before, it is not considered as a plasticizer, however it has a certain softening or lubricating effects on the plastic materials of the present invention. Therefore, not acting exactly the same way with the above-mentioned plasticizers in the traditional sense, it provides similar effects for the intended applications of the present invention. Thus in preferred embodiments of the present invention silicon oil is added to the 3 components inside the agitated vessel either alone or in combination with the above mentioned plasticizers.

Although the invention has been described in connection with specific preferred embodiments, it should be understood that the present invention should not be unduly limited to such specific embodiments, various applications of the described modes of carrying out the invention which are obvious to those skilled in the art are intended to be covered by the present invention.

### EXAMPLE

### Preparation of the nano sized magnesium hydroxide using MgCl₂ salt

200 ml of distilled water is heated up to 60°C. At this temperature, 5.04 g of MgCl₂.6H₂O salt was added to the water and mixed for 1 hour. 6 ml of NH₃ was added to the solution in drops. The solution was mixed at 300 rpm using a magnetic stirrer for 24 hours to achieve homogenous mixtures. Solution was taken into 50 ml tubes and centrifuged at 4,000 rpm for 6 minutes. After removing the solution on the precipitated materials, the precipitates were taken into a single tube. Distilled water was again added to this tube and mixed. The mixture was again centrifuged at 4,000 rpm for 6 minutes. The water on the precipitate was removed, the same process was repeated 1 time by distilled water and 1 time by adding acetone. After the acetone on the precipitate was removed for the last time, the material was placed in the oven and dried for 5 hours at 75°C.

Particles of the nano sized magnesium hydroxide synthesized from magnesium chloride salt comprise fine and long grains and the grain sizes are between 150-200 nm.

### Preparation of the nano sized magnesium hydroxide using MgNOs salt

The synthesis was carried out using the same steps as in the synthesis using magnesium chloride salt. Only 5.06 g of magnesium nitrate was used as salt. The amount of distilled water is 400 ml and NH₃ is 15 ml.

The particle structures of the nano sized magnesium hydroxide particles synthesized from magnesium nitrate salt were formed in round form. The grain size distribution is fairly uniform. The grain sizes formed are between 50-100 nm diameter and grain sizes were smaller than other salts.

### Preparation of the nano sized magnesium hydroxide using MgSO₄ salt

The synthesis was carried out using the same steps as in the synthesis using magnesium nitrate salt. Only magnesium sulphate was used as salt. The amount of distilled water is 435 ml and NH₃ is 15 ml.

The particles synthesized from magnesium sulfate were in the form of thin plates with very large surface areas with a thickness of 5-10 nm and lengths reaching to 900 nm. The particles were predominantly in the form of nanoflowers.

### Preparation of the biodegradable plastic material

The biodegradable composite plastic material of the present invention is produced by firstly drying the waste coffee grounds in a drying oven. The set temperature of the drying oven is arranged at min. 100 °C. The collected coffee waste is kept in the oven for at least 48 hours. After the drying of the waste coffee grounds, coffee granules are obtained. 10% by weight of the total composition is formed by the thus obtained waste coffee granules. Then, polylactic acid in an amount of 84% by weight of the total composition, is added to the waste coffee granules in an agitated vessel. The mixture is agitated inside the vessel without any need for additional heating step. Then 5% by weight of nano-sized magnesium hydroxide obtained from MgCl₂ salt and 1% by weight of silicon oil is added into the vessel. After sufficient mixing in the agitated vessel a homogenous mixture is obtained. This mixture is extruded in order to obtain the final biodegradable plastic product in the form of granules and/ or film structure.

**Table of results**

| Trial No | PLA | Waste Coffee Granules | Mg(OH)₂ | CaCO₃ | Al(OH)₃ | Silicon oil | Tensille Stress (MPa) | LOI (%) |
|---|---|---|---|---|---|---|---|---|
| 0 | 100 | - | - | - | - | - | 29 | 25,7 |
| 1 | 89 | 10 | - | - | - | 1 | 23 | 26,0 |
| 2 | 79 | 20 | - | - | - | 1 | 22 | 26,1 |
| 3 | 69 | 30 | - | - | - | 1 | 10 | 26,6 |
| 4 | 59 | 40 | - | - | - | 1 | 10 | 26,2 |
| 5 | 84 | 10 | 5 | - | - | 1 | 26 | 28,4 |
| 6 | 74 | 20 | 5 | - | - | 1 | 13 | 28,4 |
| 7 | 64 | 30 | 5 | - | - | 1 | 4 | 28,6 |
| 8 | 54 | 40 | 5 | - | - | 1 | 3 | 28,8 |
| 9 | 44 | 50 | 5 | - | - | 1 | 2 | 28,8 |
| 10 | 79 | 10 | 10 | - | - | 1 | 15 | 29,4 |
| 11 | 69 | 20 | 10 | - | - | 1 | 13 | 29,3 |
| 12 | 59 | 30 | 10 | - | - | 1 | - | 29,2 |
| 13 | 49 | 40 | 10 | - | - | 1 | - | 29,3 |
| 14 | 84 | 10 | - | 5 | - | 1 | 14 | 28,1 |
| 15 | 74 | 20 | - | 5 | - | 1 | 13 | 28,1 |
| 16 | 64 | 30 | - | 5 | - | 1 | 13 | 28,1 |
| 17 | 54 | 40 | - | 5 | - | 1 | 5 | 28,1 |
| 18 | 44 | 50 | - | 5 | - | 1 | 4 | 28,0 |
| 19 | 79 | 10 | - | 10 | - | 1 | 10 | 28,3 |
| 20 | 69 | 20 | - | 10 | - | 1 | 8 | 28,3 |
| 21 | 59 | 30 | - | 10 | - | 1 | 5 | 28,3 |
| 22 | 49 | 40 | - | 10 | - | 1 | 2 | 28,3 |
| 23 | 84 | 10 | - | - | 5 | 1 | 25 | 28,8 |
| 24 | 74 | 20 | - | - | 5 | 1 | 20 | 28,8 |
| 25 | 64 | 30 | - | - | 5 | 1 | 20 | 28,8 |
| 26 | 54 | 40 | - | - | 5 | 1 | 4 | 28,7 |
| 27 | 44 | 50 | - | - | 5 | 1 | 3 | 28,7 |
| 28 | 79 | 10 | - | - | 10 | 1 | 18 | 29,0 |
| 29 | 69 | 20 | - | - | 10 | 1 | 17 | 29,1 |
| 30 | 59 | 30 | - | - | 10 | 1 | 4 | 29,0 |
| 31 | 49 | 40 | - | - | 10 | 1 | 5 | 29,2 |

**Table showing the tensile strength at break and amount of oxygen required for combustion for varying compositions.** (All components of the composition are given in percentage, % values)

The amounts of the components given in the table are in percentage by weight of the total composition.

Limiting Oxygen Index (LOI) is one of the critical indicators of flame retardancy and shows the minimum percentage of oxygen that is needed for the combustion of a polymeric material. In order to determine the Limiting Oxygen Index the following test is carried out: a candle-like sample is supported in a vertical glass column and a slow stream of oxygen/nitrogen mix is fed into the glass column. A flame ignites the sample and it burns downward into unheated material. The oxygen/nitrogen ratio can be varied and the test records the minimum concentration of oxygen (as a percentage value) that will just support combustion. The LOI test is used to determine a basic property of the material.

Mechanical tests are performed using Schimadzu device, AG-X 50kN model. The test area is 500mmx1060mm. Test speed range: 0.0005 mm/min-1000mm/min.

Scanning electron microscope (ZEISS LS-10 Life Science) was used to analyze grain structure of synthesized magnesium hydroxide powders at 25 kV. SEM images were taken between 20,000 and 50,000 magnifications.

According to a preferred embodiment of the present invention, a biodegradable composite material modified with waste coffee grounds comprises,
1 to 70% by weight of coffee granules obtained from waste coffee grounds,
10 to 95% by weight of polylactic acid,
5 to 15% by weight of at least one flame retardant material selected from the list comprising magnesium hydroxide, aluminum hydroxide and calcium carbonate,
0 to 1% by weight of silicon oil,
wherein the percentages are based on the total composition and
wherein the composite material has a limiting oxygen index value of more than 26%.

In another embodiment a biodegradable composite material comprises 5 to 50% by weight of coffee granules obtained from waste coffee grounds. In a further embodiment a biodegradable composite material comprises 10 to 20% by weight of coffee granules obtained from waste coffee grounds.

According to a preferred embodiment the flame-retardant of the biodegradable composite material is nano-sized magnesium hydroxide. In a still preferred embodiment the biodegradable composite material comprises 5 to 10% by weight of nano-sized magnesium hydroxide. In another embodiment the nano-sized magnesium hydroxide is obtained using MgCl salt and has an average particle size of 150 to 200 nm. In a further embodiment, the nano-sized magnesium hydroxide has an average particle size of less than 150 nm. In a different embodiment, the nano-sized magnesium hydroxide has an average particle size of between 50 to 100 nm. According to an embodiment of the present invention the biodegradable composite material comprises 44 to 84% by weight of polylactic acid.

In a further embodiment the biodegradable composite material comprises, 0.1 to 10% by weight of a plasticizer selected from the list comprising, diisobutyl phthalate, diisodecyl phthalate, diisononyl phthalate, chlorinated paraffin and dioctyl terephthalate.

According to an embodiment of the method of the present invention, the process for producing a fire-resistant biodegradable plastic composite material comprises the steps of,
firstly drying the waste coffee grounds in a drying oven wherein the set temperature of the oven is at least 100 °C to obtain coffee granules,
grinding the coffee granules in a ball mill and adding to an agitated vessel,
adding polylactic acid and mixing in the agitated vessel,
separately obtaining nano-sized magnesium hydroxide from MgCL₂ salt or from any other material,
adding the nano-sized magnesium hydroxide and
optionally adding a plasticizer or a silicon oil and mixing until a homogeneous mixture is formed,
extruding the mixture in order to obtain the final biodegradable composite product of claims 1 to 10 in the form of granules and/ or film structure.

In further embodiments the biodegradable composite material of the present invention is used for producing construction materials, is used as a raw material for producing plastic plates, forks, knives or spoons, for producing computer housing and for producing furniture parts.

The present invention represents a novel solution in the field of sustainable technologies by providing a practical and scalable alternative to single-use plastics that utilizes innovative materials and processes. This invention goes beyond the limitations of prior art by offering a cost-effective and efficient solution that has a positive impact on the environment.

In conclusion, the present invention represents a unique and significant advancement in the field of sustainable technologies and offers a practical solution to the critical issue of plastic pollution.

## Claims

1. A biodegradable composite material modified with waste coffee grounds comprising,
1 to 70% by weight of coffee granules obtained from waste coffee grounds,
10 to 95% by weight of polylactic acid,
5 to 15% by weight of at least one flame retardant material selected from the list comprising magnesium hydroxide, aluminum hydroxide and calcium carbonate,
0 to 1% by weight of silicon oil,
wherein the percentages are based on the total composition and
wherein the composite material has a limiting oxygen index value of more than 26%.

2. A biodegradable composite material according to claim 1 comprising 5 to 50% by weight of coffee granules obtained from waste coffee grounds.

3. A biodegradable composite material according to claim 1 comprising 10 to 20% by weight of coffee granules obtained from waste coffee grounds.

4. A biodegradable composite material according to anyone of claims 1 to 3 wherein the flame-retardant material is nano-sized magnesium hydroxide.

5. A biodegradable composite material according to claim 4 comprising 5 to 10% by weight of nano-sized magnesium hydroxide.

6. A biodegradable composite material according to claim 5 wherein the nano-sized magnesium hydroxide is obtained using MgCl₂ salt and has an average particle size of 150 to 200 nm.

7. A biodegradable composite material according to anyone of claims 1 to 5 wherein the nano-sized magnesium hydroxide has an average particle size of less than 150nm.

8. A biodegradable composite material according to anyone of claims 1 to 5 wherein the nano-sized magnesium hydroxide has an average particle size of between 50 to 100 nm.

9. A biodegradable composite material according to anyone of claims 1 to 8 comprising 44 to 84% by weight of polylactic acid.

10. A biodegradable composite material according to anyone of claims 1 to 9 comprising,
0.1 to 10% by weight of a plasticizer selected from the list comprising, diisobutyl phthalate, diisodecyl phthalate, diisononyl phthalate, chlorinated paraffin and dioctyl terephthalate.

11. A process for producing a fire-resistant biodegradable plastic composite material comprising the steps of,
firstly drying the waste coffee grounds in a drying oven wherein the set temperature of the oven is at least 100 °C, to obtain coffee granules,
grinding the coffee granules in a ball mill and adding to an agitated vessel,
adding polylactic acid and mixing in the agitated vessel,
separately obtaining nano-sized magnesium hydroxide,
adding the nano-sized magnesium hydroxide and
optionally adding a plasticizer or a silicon oil and mixing until a homogeneous mixture is formed,
extruding the mixture in order to obtain the final biodegradable composite product of claims 1 to 10 in the form of granules and/ or film structure.

12. Use of the biodegradable composite material of anyone of claims 1 to 10 for producing construction materials.

13. Use of the biodegradable composite material of anyone of claims 1 to 10 as a raw material for producing plastic plates, forks, knives or spoons.

14. Use of the biodegradable composite material of anyone of claims 1 to 10 for producing computer housing.

15. Use of the biodegradable composite material of anyone of claims 1 to 10 for producing furniture parts.
